# EUROPEAN PATENT APPLICATION

(11) **EP 4 736 651 A1**
(43) Date of publication of application: **06.05.2026**
(21) Application number: 25208798.6
(22) Date of filing: 15.10.2025
(51) Int. Cl.: A21C 11/12, A21C 15/02

(54) **METHOD FOR MAKING A PLURALITY OF WAFER BODIES**

(30) Priority: 31.10.2024 IT 202400024429
(71) Applicant: Soremartec S.A., 2633 Senningerberg (LU)
(72) Inventor: TAVELLA, Andrea, L-2633 Senningerberg (LU); RUBINETTO, Paolo, L-2633 Senningerberg (LU); CANTAMESSA, Franco, L-2633 Senningerberg (LU)
(74) Representative: Buzzi, Notaro & Antonielli d'Oulx S.p.A.

(57) **Abstract**

A method for making a plurality of wafer bodies (400) is described, wherein two wafer sheets (100, 200) are mutually coupled so that respective parts (102, 202) are united together to form the wafer bodies (400), and wherein, subsequently, the united parts (102, 202) are separated from the mutually coupled wafer sheets (100, 200) .

The method is characterized in that it involves the use of wafer sheets (100, 200) provided with coupling formations (105, 205) with the function of guaranteeing a correct mutual positioning of the wafer sheets (100, 200) .

## Description

### Field of the invention

The present invention relates to a method for making a plurality of wafer bodies, in particular of the type comprising a first part and a second part mutually coupled to each other, and an internal space delimited by the first part and the second part.

More particularly, the present invention relates to a method comprising the steps of:
- making a first wafer sheet comprising a plurality of first parts, via a wafer batter that is baked inside a first mold device;
- making a second wafer sheet comprising a plurality of second parts, via a wafer batter that is baked inside a second mold device;
- coupling together the first wafer sheet and the second wafer sheet so that each of said first parts of said first wafer sheet is coupled with a respective second part of said second parts of the second wafer sheet;
- separating said first parts and said second parts mutually coupled from said first and second wafer sheets, so as to obtain the plurality of wafer bodies.

A method of the type in question involves mutually coupling the first parts and the second parts that together will form the wafer bodies when these parts have not yet been separated from their respective sheets on which they were made.

This facilitates handling and manipulation operations, since the wafer sheet holds these parts together, allowing to avoid the complexities arising from managing a plurality of independent parts.

On the other hand, the choice to couple the wafer sheets together, and not just the individual parts made on them, makes the coupling phase particularly critical, as any misalignment between the two wafer sheets affects the mutual coupling of all their respective parts.

For this reason, solutions have so far been predominantly widespread in which said first and second parts are first separated from their respective wafer sheets, and only subsequently are coupled together; in this case, any positioning errors of some first and second parts do not affect all the others.

In this context, the present invention provides a method of the type indicated at the beginning that is capable of overcoming the drawback discussed above.

In general, the present invention relates to a method according to claim 1.

The claims form an integral part of the teaching provided herein.

Further characteristics and advantages of the present invention will be apparent from the following description with reference to the appended drawings, provided by way of non-limiting example only, in which:
- figure 1 schematically represents an embodiment of the method described herein;
- figures 2a and 2b schematically illustrate two successive instants of a coupling phase of an embodiment of the method described herein;
- figure 3 represents a top view of an example of a wafer sheet used in the method described herein.

In the following description, various specific details are illustrated for a thorough understanding of the embodiments. The embodiments can be implemented without one or more of the specific details, or with other methods, components or materials etc. In other instances, known structures or operations are not shown or described in detail to avoid obscuring various aspects of the embodiment.

The references used herein are for convenience only and thus do not define the scope of protection or the scope of the embodiments.

As anticipated above, the method described herein is intended for the production of a plurality of wafer bodies, each comprising a first part and a second part mutually coupled to each other, and an internal space delimited by the first part and the second part.

The wafer bodies in question can be used for the production of sweet or savory products. For example, such wafer bodies can be used for the production of filled confectionery products in which a filling (e.g., a cream) is contained in the internal space of the wafer bodies.

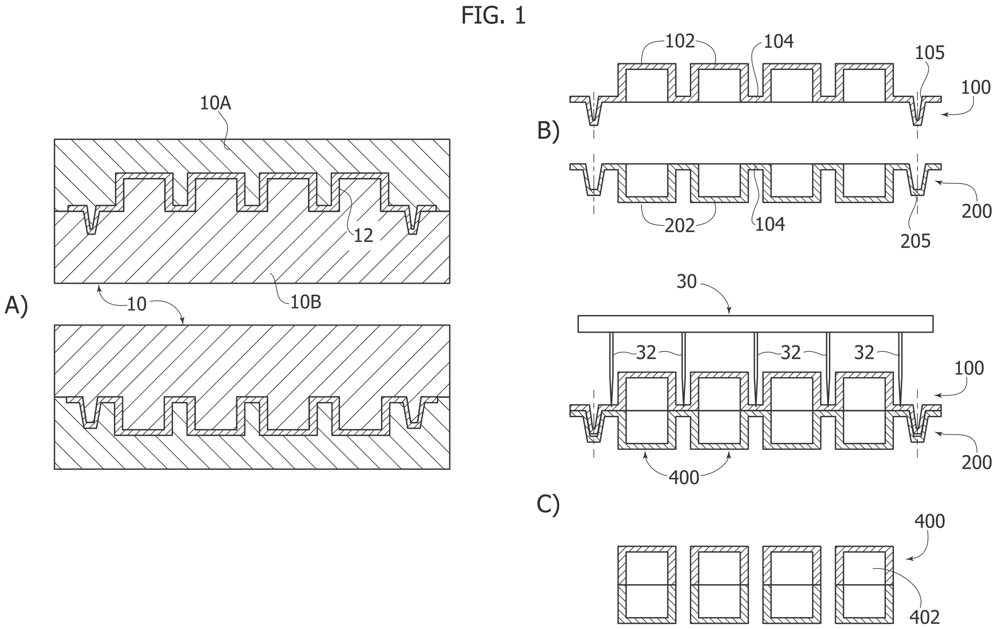

With reference now to figure 1, phase A of the method illustrated therein represents the making of a first wafer sheet 100, comprising a plurality of first parts 102, and the making of a second wafer sheet 200, comprising a plurality of second parts 202.

The two wafer sheets 100, 200 are made using a common wafer batter (commonly referred to as "batter") and through production methods that are per se conventional.

In one or more preferred embodiments, as the one illustrated, the wafer batter is dosed inside a mold cavity 12 of a mold device 10, where it is subjected to a baking process; at the end of the baking process, the wafer sheet 100 or 200 is obtained.

The mold device 10 can be of any known type suitable for the indicated purposes; in one or more preferred embodiments, as the one illustrated, the mold device 10 can be a baking plate comprising two half-plates 10A, 10B, connected to each other and movable relative to each other between an open position and a closed position in which the two half-plates together define the mold cavity 12.

For reasons that will become apparent later, the two wafer sheets 100 and 200 are each made via a respective mold device 10.

The respective parts 102, 202 of the two sheets 100, 200 are configured to be mutually coupled forming said wafer bodies (indicated by reference number 400 in figure 1) provided with an internal space 402, preferably closed.

In the illustrated example, both the parts 102 of the wafer sheet 100 and the parts 202 of the wafer sheet 200 have a hollow conformation. However, it is also possible to provide implementations of the method described herein in which the parts of one of the two wafer sheets instead have a substantially flat configuration; in this case, the internal spaces 402 of the wafer bodies 400 are thus defined entirely within the hollow parts of the single wafer sheet provided with such parts, while the flat parts of the other wafer sheet merely close these internal spaces 402 from the outside.

Regardless of the specific conformation of the parts 102, 202, each has a peripheral edge intended to mate with a peripheral edge of the other part, when these are mutually coupled.

In the illustrated example, the single part 102 has, in particular, a mouth edge 102A that delimits the entrance to the internal cavity of the same part, and, similarly, the part 202 has a homologous mouth edge 202A. The two edges 102A, 202A are configured to mate with each other, in the condition of mutual coupling of the two parts 102, 202.

In one or more preferred embodiments, as the one illustrated, each of the sheets 100, 200 comprises respective flat portions 104, 204, which connect the respective parts 102, 202 together.

Preferably, the flat portions 104, 204 all lie on the same geometric plane so as to together define a general plane of the sheet.

In alternative embodiments, the portions of the wafer sheets 100 and 200 that connect the respective parts 102, 202 together may have configurations that deviate more or less evidently from a flat conformation.

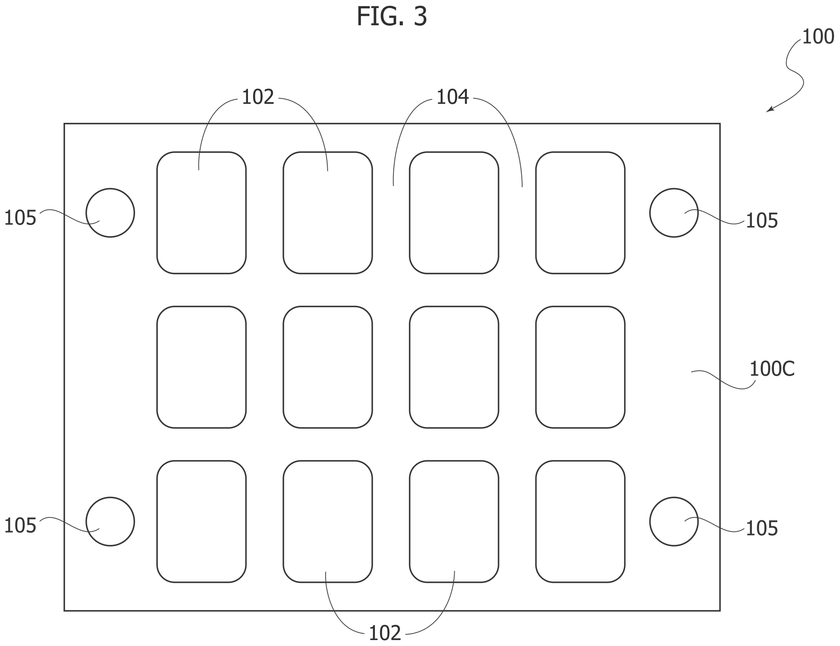

Figure 3 illustrates a top view of the wafer sheet 100.

Phase B of the method illustrated in figure 1 represents the phase in which the two sheets 100, 200 are mutually coupled so that the parts 102 of the wafer sheet 100 are coupled with respective parts 202 of the wafer sheet 200, in a condition where the edges 102A and 202A mate with each other.

In general, such a condition involves placing the edges 102A and 202A one against the other to achieve the mutual union of the parts 102 and 202.

In particular, the edges 102A and 202A must be sufficiently aligned to ensure a correct union of the parts 102 and 202.

In a preferred application of the method described herein, the parts 102 and 202 are united together via a welding operation (not illustrated) which involves applying welding material onto the respective edges 102A and 202A (or, alternatively, only onto the edges 102A or only onto the edges 202A).

In this case, the edges 102A and 202A must be mutually aligned so as to achieve a mutual superposition that allows the welding material to realize a stable and resistant weld of said same edges.

Still in general, the edges 102A and 202A must then be correctly aligned to form wafer bodies 400 conforming to a predetermined geometry.

In view of the above, in the coupling phase B the wafer sheets 100, 200 must therefore be arranged according to a predefined mutual positioning that is such as to be able to guarantee a condition of union of the parts 102 and 202 as described above.

In the illustrated example, the condition of union of the edges 102A and 202A also corresponds to an arrangement in contact of the flat portions 104 of the wafer sheet 100 with the flat portions 204 of the wafer sheet 200. This condition is, however, not essential; for example, it is possible to provide embodiments in which the edges 102A, 202A protrude relative to the flat portions 104, 204, so that, when said edges are placed in mutual contact, the flat portions 104, 204 instead remain at a given mutual distance.

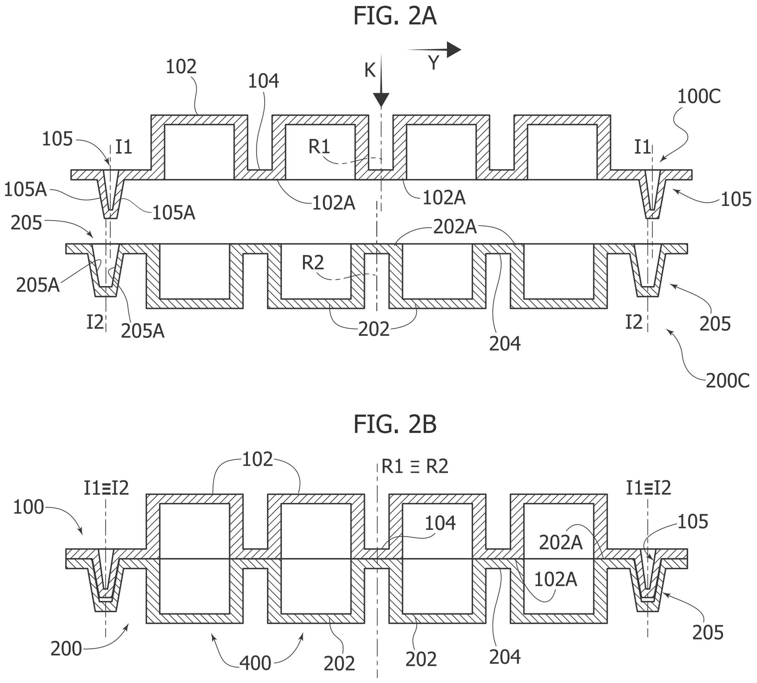

With reference to figure 1, the coupling phase B involves arranging the two wafer sheets 100, 200 one above the other, and mutually vertically spaced, and, subsequently, realizing a relative movement (indicated by K in figure 2A) between the two sheets, along a vertical direction, to bring them into mutual contact and into said predefined mutual positioning.

According to an important characteristic of the solution described herein, both wafer sheets 100 and 200 are made so as to comprise respective coupling formations 105, 205 which are intended to cooperate with each other during the relative movement K of the two sheets, performing the function of arranging the two sheets 100, 200 in said predefined mutual positioning.

As will be seen in greater detail below, the formations 105 and 205 are in particular intended to couple with each other and to determine, by effect of their coupling, an arrangement of the two wafer sheets 100 and 200 in the predefined mutual positioning.

Preferably, once the two wafer sheets 100, 200 have been mutually coupled, the same coupling formations 105, 205 also perform the function of preventing any movement of one sheet relative to the other, in a plane parallel to the general planes of the two sheets.

As will be seen in greater detail below, the formations 105 and 205 are in particular configured to realize a coupling between the two wafer sheets 100 and 200 capable of constraining them against any movement in a plane parallel to the general planes of the two sheets.

Thanks to said coupling formations, the method described herein is therefore capable of ensuring that the wafer sheets 100 and 200 are placed in the predefined mutual positioning and that they remain in said positioning at least until the respective parts 102 and 202, mutually coupled, are separated from the sheets themselves.

In one or more preferred embodiments, as the one illustrated (see figures 2A and 2B), the coupling formations 105 appear in the form of protrusions that protrude from the flat portions 104, in a direction opposite to that in which the parts 102 protrude, i.e., in the direction towards which the second wafer sheet 200 is located, with reference to the coupling phase B.

On the other hand, the coupling formations 205 of the wafer sheet 200 appear in the form of cavities, which face the same direction as the cavities of the parts 202 face, and which therefore face towards the wafer sheet 100, in the coupling phase B.

The cavities 205 of the wafer sheet 200 are configured to receive the protrusions 105 of the wafer sheet 100, during the coupling phase B, and to cooperate with them to perform said functions of arranging the two sheets 100 and 200 in the predefined mutual positioning and of constraining them in said same positioning.

For reasons that will become apparent later, the protrusions 105 protrude relative to the flat portions 104 so as to engage with the cavities 205 and cooperate with them in the described modes, even before the edges 102A and 202A in turn come into mutual contact.

In one or more preferred embodiments, as the one illustrated, the formations 105, preferably in the form of protrusions, and the formations 205, preferably in the form of cavities, are provided with guide surfaces configured to realize a positioning action of the wafer sheets 100 and 200 such that one or the other of the two sheets is moved relative to the other sheet, in a plane parallel to the general planes of the two sheets, by effect of their mutual approach movement K, so as to arrange the two sheets in the predefined mutual positioning.

In one or more preferred embodiments, as the one illustrated, each formation or protrusion 105 comprises at least one pair of guide surfaces 105A, which are inclined so as to be convergent in the direction towards the second wafer sheet 200, and which are also symmetrical with respect to a reference axis I1; similarly, each formation or cavity 205 presents at least one pair of guide surfaces 205A, which are inclined so as to be divergent in the direction towards the first sheet 100, and which are symmetrical with respect to a reference axis I2.

With particular reference to figures 2A and 2B, during the movement K of approach of the wafer sheet 100 to the wafer sheet 200, the guide surfaces 105A and 205A, coming into contact with each other, perform a centering action of the formations 105 and 205 such that, assuming that the wafer sheet 100 is free to move parallel to its general plane, the axis I1 of the formation 105 is positioned so as to align with the axis I2 of the formation 205.

The illustrated example shows only the inclined surfaces 105A, 205A of the formations 105, 205, which are suitable for inducing a relative movement between the two wafer sheets 100 and 200 along a direction Y of the general plane of one of the two sheets.

Preferably, the same formations 105, 205, or further formations 105, 205 of the two sheets, are provided with respective further pairs of inclined surfaces (not illustrated in the figures), which are instead configured to determine a relative movement of the two wafer sheets along a direction - always in a plane parallel to the general planes of the two sheets - orthogonal to the direction Y (i.e., orthogonal to the plane of the image of figure 2A), based on the same teachings provided above.

In an alternative embodiment, instead of the pairs of inclined surfaces described above, the formations 105, 205 may present guide surfaces in the form of conical surfaces that develop around the reference axes I1 and I2 and with respect to which said axes constitute respective geometric axes; such conical guide surfaces can be arranged to perform the same centering action described above.

As described above, the condition of alignment between the axes I1 and I2 of the formations 105 and 205 will correspond to the achievement of the predefined mutual positioning by the two wafer sheets 100 and 200. Said predefined mutual positioning may, for example, provide that respective central reference axes R1, R2 of the two wafer sheets 100, 200 are in turn mutually aligned (see figures 2A and 2B). The person skilled in the art will then understand that said predefined mutual positioning can also be defined based on dimensional tolerances.

In one or more preferred embodiments, as the one illustrated, the coupling formations 105, 205 are further configured to realize a mutual form coupling, once the two wafer sheets 100, 200 have been coupled together, such as to realize a constraint between the two wafer sheets capable of preventing any relative movement between the two sheets in a plane parallel to their general planes.

In this way, the coupling formations 105, 205 prevent any displacements of the two wafer sheets 100 and 200 from their predetermined positioning before the respective parts 102 and 202, mutually coupled, are separated from the wafer sheets themselves.

In the illustrated example, said form coupling is realized by means of the two pairs of guide surfaces 105A and 205A, which all come, simultaneously, into mutual contact, once the two wafer sheets 100 and 200 reach the predetermined positioning.

With reference to the figure, it can be noted how, in this condition, any movement of each formation 105 in a plane parallel to the general planes of the two sheets is prevented, as it is held between the two guide surfaces 205A in contact with the guide surfaces 105A of the same formation 105.

Likewise, the form coupling between the formations 105 and 205 also provides that the two pairs of inclined surfaces not visible in the figure (which are mentioned above with reference to the action of determining a relative movement between the two wafer sheets along a direction orthogonal to direction Y) are in turn in mutual contact in the same manner indicated above with reference to the surfaces 105A and 205A.

In one or more preferred embodiments, as the one illustrated, the coupling formations 105, 205 are made on a respective peripheral region 100C, 200C of the wafer sheets 100 and 200, which extends around the region of the respective sheet in which the respective parts 102 and 202 are made; in figure 3 the region 100C of the wafer sheet 100 is visible from above.

Said location offers the advantage of being able to arrange the parts 102 and 202 in very close ranks and all equally spaced.

In other embodiments (not illustrated), the coupling formations 105, 205 can be made on one or more internal regions of the wafer sheets 100 and 200.

Whatever the positioning of the formations 105, 205 on their respective wafer sheets 100, 200, the flat portions 104, 204 perform the function of connecting the parts 102/202 together and the same parts to the coupling formations 105/205.

Furthermore, the number of coupling formations 105, 205 and their specific positioning along the respective peripheral regions 100C, 200C may vary depending on the specific needs of the various applications.

In one or more preferred embodiments, as the one illustrated, after the coupling phase B described above, the method described herein comprises a cutting operation C in which the wafer bodies 400, obtained from the union of the parts 102 and 202 of the two wafer sheets 100 and 200, are separated from each other.

This operation can be performed according to modes known in the art.

In the illustrated example, this operation involves the use of a cutting device 30, provided with a plurality of cutting blades 32, which is commanded according to a vertical downward movement, thus going to break, via its blades 32, the flat portions 104 and 204 of the two wafer sheets 100 and 200, so as to allow the wafer bodies 400 to be separated from each other.

Naturally, the principle of the invention remaining firm, the details of construction and the embodiments may vary, even significantly, with respect to what has been illustrated here by way of non-limiting example only, without thereby departing from the scope of the invention, as defined by the appended claims.

## Claims

1. Method for making a plurality of wafer bodies (400), each comprising a first part (102) and a second part (202) mutually coupled to each other and an internal space (402) delimited by said first and second part;
said method comprising the steps of:
- making a first wafer sheet (100) comprising a plurality of first parts (102), via a wafer batter that is baked inside a first mold device;
- making a second wafer sheet (200) comprising a plurality of second parts (202), via a wafer batter that is baked inside a second mold device;
- coupling together said first wafer sheet (100) and said second wafer sheet (200) so that each of said first parts (102) of said first sheet is coupled with a respective second part (202) of said second parts of said second sheet;
- separating said first parts (102) and said second parts (202) mutually coupled from said first and second wafer sheets, so as to obtain said plurality of wafer bodies (400);
said method being **characterized in that**
- making said first wafer sheet (100) includes making, on said first wafer sheet, first coupling formations (105);
- making said second wafer sheet (200) includes making, on said second wafer sheet (200), second coupling formations (205), and
- coupling together said first wafer sheet (100) and said second wafer sheet (200) includes arranging said first and second wafer sheets in a predefined mutual positioning through the coupling of said first coupling formations (105) with said second coupling formations (205).

2. Method according to claim 1,
wherein coupling together said first wafer sheet (100) and said second wafer sheet (200) includes bringing said first wafer sheet (100) closer to said second wafer sheet (200), according to an approach movement (K) along a direction transverse to the planes of said first and second wafer sheets (100, 200),
wherein said first coupling formations (105) comprise first guide surfaces (105A), and said second coupling formations (205) comprise second guide surfaces (205A),
wherein said first guide surfaces (105A) and said second guide surfaces (205A) cooperate with each other to perform a positioning action of said first wafer sheet (100) and of said second wafer sheet (200), such that one of said first and second wafer sheets (100, 200) is moved relative to the other wafer sheet in a plane parallel to the plane of said sheets, by effect of said approach movement, so as to arrange said first and second wafer sheets (100, 200) in said predefined mutual positioning.

3. Method according to claim 2, wherein said first guide surfaces (105A) and said second guide surfaces (205A) are configured to perform a centering action such that respective reference axes (I1) of the first coupling formations (105A) are aligned with respective reference axes (I2) of the second coupling formations (205A), by effect of said approach movement (K).

4. Method according to claim 2 or 3, wherein each first coupling formation (105) of said first wafer sheet (100) comprises at least one pair of first guide surfaces (105A) that are inclined so as to be convergent or divergent in the direction towards a respective second coupling formation of said second wafer sheet (200), and are symmetrical with respect to a reference axis (I1) of said first formation (105), and wherein the respective second formation (205) comprises at least one pair of second guide surfaces (205A) that are inclined so as to be divergent or convergent in the direction towards said first formation (105), and are symmetrical with respect to a reference axis (I2) of said second formation (205).

5. Method according to claim 2 or 3, wherein said first guide surfaces (105A) are conical surfaces that develop around the reference axes (I1) of the first coupling formations (105), and with respect to which the reference axes (I1) of the first formations constitute respective geometric axes, and wherein said second guide surfaces (105A) are conical surfaces that develop around the reference axes (I2) of the second coupling formations (205), and with respect to which the reference axes (I2) of the second formations constitute respective geometric axes.

6. Method according to any one of claims 2 to 5, wherein said first guide surfaces (105A) and said second guide surfaces (205A) are configured to realize a form coupling between said first coupling formations (105) and said second coupling formations (205), once said first and second wafer sheets (100, 200) are in said predefined mutual positioning, so as to constrain said first and second wafer sheets in said predefined positioning preventing any relative movement thereof in a plane parallel to the plane of said first or second wafer sheet.

7. Method according to any one of the preceding claims, wherein coupling together said first wafer sheet (100) and said second wafer sheet (200) includes, after said first and second wafer sheets (100, 200) have been arranged in said predefined mutual positioning, realizing a form coupling between said first coupling formations (105) and said second coupling formations (205), such that any relative movement of said first and second wafer sheets (100, 200) in a plane parallel to the planes of said first and second wafer sheets (100, 200) is prevented.

8. Method according to any one of the preceding claims, wherein said first wafer sheet (100) comprises a first side that is facing said second wafer sheet (200) in said phase of coupling of said first and second sheets, and a second side opposite to said first side, and
wherein said second wafer sheet (200) comprises a first side that is facing said first wafer sheet (100) in said phase of coupling of said first and second wafer sheets, and a second side opposite to said first side,
wherein said first coupling formations are formed by protrusions (105) that protrude from said first side of said first wafer sheet (100) in a direction towards said first side of said second wafer sheet (200), and
wherein said second coupling formations are formed by cavities (205) that are facing towards said first side of said first wafer sheet (100) and receive said protrusions (105) of said first wafer sheet (100), in said phase of coupling of said first and second wafer sheets (100, 200).

9. Method according to claim 8, wherein said protrusions (105) protrude from said first side of said first wafer sheet (100) for a length such that said protrusions (105) engage said cavities (205), before said first side of said first wafer sheet (100) is brought into contact with said first side of said second wafer sheet (200) or in any case before said first wafer sheet (100) and said second wafer sheet (200) reach said predefined mutual positioning.

10. Method according to any one of the preceding claims, wherein
- said first wafer sheet (100) comprises flat portions (104) collectively defining a general plane of the sheet, which connect said first parts (102) together, and said first coupling formations (105) to said first parts (102),
- said second wafer sheet (200) comprises flat portions (204) collectively defining a general plane of the sheet, which connect said second parts (202) together, and said second coupling formations (205) to said second parts (202).

11. Method according to any one of the preceding claims, wherein
said first parts (102) and/or said second parts (202) each have a hollow conformation, and
wherein said first parts (102) comprise first peripheral edges (102A), and said second parts (202) comprise second peripheral edges (202A),
wherein said first peripheral edges (102A) of said first parts (100) are intended to mate with said second peripheral edges (202A) of said second parts (200) in said predefined mutual positioning of said first and second wafer sheets (100, 200).

12. Method according to any one of the preceding claims, wherein said first coupling formations (105) are placed along a peripheral area (100C) of said first wafer sheet (100) that surrounds an internal area of said first wafer sheet (100) in which said first parts (102) are made, and
wherein said second coupling formations (205) are placed along a peripheral area (200C) of said second wafer sheet (200) that surrounds an internal area of said second wafer sheet (200) in which said second parts (202) are made.

13. Wafer sheet (100) for making a plurality of wafer bodies (400) through the method according to any one of the preceding claims,
said wafer sheet being intended to be used as said first wafer sheet (100) in said method,
wherein said wafer sheet (100) comprises:
- a plurality of first parts (102) intended to couple with second parts (202) of a further wafer sheet used as said second wafer sheet (200) in said method; and
- a plurality of first coupling formations (105) configured to couple, in said coupling phase of said method, with second coupling formations (205) of said further wafer sheet, and to arrange, by effect of their coupling with said second formations (205), said wafer sheet and said further wafer sheet in said predefined mutual positioning.

14. Wafer sheet according to claim 13, comprising a first side that is intended to face said further wafer sheet (200) in said coupling phase of said method, and a second side opposite to said first side,
wherein said first coupling formations are formed by protrusions (105) that protrude from said first side of said wafer sheet (100), in a direction opposite to that in which said first parts (102) protrude from said second side.

15. Wafer sheet according to claim 13 or 14, wherein said first coupling formations (105) are placed along a peripheral area (100C) of said wafer sheet (100) that surrounds an internal area of said wafer sheet in which said first parts (102) are made.

16. Wafer sheet (200) for making a plurality of wafer bodies through the method according to any one of the preceding claims,
said wafer sheet being intended to be used as said second wafer sheet (200) in said method,
wherein said wafer sheet (200) comprises:
- a plurality of second parts (202) intended to couple with first parts (102) of a further wafer sheet used as said first wafer sheet (100) in said method; and
- a plurality of second coupling formations (205) configured to couple, in said coupling phase of said method, with first coupling formations (105) of said further wafer sheet, and to arrange, by effect of their coupling with said first formations (105), said wafer sheet and said further wafer sheet in said predefined mutual positioning.

17. Wafer sheet according to claim 16, comprising a first side intended to face said further wafer sheet (100) in said coupling phase of said method, and a second side opposite to said first side,
wherein said second coupling formations (205) are formed by cavities (205) that are located on said first side and are configured to receive the first coupling formations (105) in the form of protrusions of said further wafer sheet (100), in said coupling phase of said method.

18. Wafer sheet according to claims 16 or 17, wherein said second coupling formations (205) are placed along a peripheral area (200C) of said wafer sheet (200) that surrounds an internal area of said wafer sheet (200) in which said second parts (202) are made.

19. Mold device (10) for making a wafer sheet (100, 200) according to any one of claims 13 to 18, said mold device (10) comprising two half-plates (10A, 10B) connected to each other and movable relative to each other between an open position and a closed position in which the two half-plates together define a mold cavity (12) for receiving a wafer batter and for subjecting said received wafer batter to a baking phase, wherein said mold cavity (12) has a conformation such that the wafer batter that fills said mold cavity and is subjected to said baking phase, forms said wafer sheet (100, 200).
